# EUROPÄISCHE PATENTSCHRIFT

(11) **EP 2 578 445 B1**
(45) Veröffentlichungstag und Bekanntmachung des Hinweises auf die Patenterteilung: **16.11.2016**
(21) Anmeldenummer: 12008259.9
(22) Anmeldetag: 14.07.2009
(51) Int. Cl.: B60N 2/28

(54) **Kindersitz mit Seitenaufprallschutz**
Child seat with side impact protection
Siège pour enfants doté d'une protection contre les chocs latéraux

(43) Veröffentlichungstag der Anmeldung: 10.04.2013
(62) Teilanmeldung aus: 09009160.4
(73) Patentinhaber: BRITAX RÖMER Kindersicherheit GmbH, 89077 Ulm (DE)
(72) Erfinder: Powell, Iain, Andover SP10 3TX (GB); Carine, David, Shaun, Saint Mary Bourne Nr Andover SP11 6DF (GB); Moon, Richard, Arthur, Ludgershall Andover SP11 9PQ (GB); Whiteway, Andrew, Anthony, Andover SP10 4DD (GB)
(74) Vertreter: Bosch, Matthias

(56) Entgegenhaltungen:
- EP-A2- 0 931 694
- EP-A2- 1 486 384
- WO-A1-91/19623
- DE-A1- 10 258 245
- US-A1- 2009 152 913

## Beschreibung

Aus dem Stand der Technik sind seit langem Kindersitze zum sicheren Transport von Kindern in Kraftfahrzeugen bekannt. Üblicherweise werden derartige Kindersitze auf einem der Sitze eines Kraftfahrzeugs befestigt. Dabei werden sie entweder durch einen Sicherheitsgurt des Fahrzeugs fixiert oder durch einen speziellen Befestigungsmechanismus auf dem Fahrzeugsitz verankert.

In beiden Fällen soll durch die Befestigung die relative Bewegung des Kindersitzes zum Fahrzeugsitz minimiert werden. Bei einer starken Beschleunigung oder Verzögerung des Kraftfahrzeugs kann eine derartige Bewegung dennoch auftreten.

Bei einem starken Bremsvorgang oder dem Aufprall des Fahrzeugs in Fahrzeuglängsrichtung auf ein Hindernis kann der Kindersitz folglich verglichen mit dem Fahrzeug verzögert abgebremst werden, so dass der Kindersitz auf dem Fahrzeugsitz in Fahrtrichtung verschoben wird.

In der Regel ist der Kindersitz so im Fahrzeug angebracht, dass er bei dieser Verschiebungsbewegung nicht auf ein Hindernis im Fahrzeuginneren auftrifft. Entsprechend wird die Relativbewegung des Sitzes in Fahrzeuglängsrichtung also üblicherweise durch die Sitzbefestigungsmittel abgebremst und begrenzt.

Grundsätzlich anders ist die Situation bei einer Relativbewegung des Kindersitzes in Fahrzeugquerrichtung. Eine derartige Bewegung kann z.B. durch den Aufprall eines anderen Fahrzeugs auf die Seite des Fahrzeugs in Fahrzeugquerrichtung hervorgerufen werden. Da der Kindersitz meist auf einem der Seitensitze des Fahrzeugs angebracht wird, weist er regelmäßig einen geringen seitlichen Abstand zur Innenseite des Fahrzeugs auf. Dieser Abstand reicht in der Regel nicht aus, um die Relativbewegung des Kindersitzes vor einem Aufprall des Kindersitzes auf die Fahrzeuginnenseite mit Hilfe der Sitzbefestigungsmittel hinreichend abzubremsen.

Bei einem Seitenaufprall auf das den Kindersitz führende Fahrzeug besteht deshalb die Gefahr, dass der Kindersitz mit nicht unerheblicher Geschwindigkeit auf die Innenseite des Fahrzeugs auftrifft. Bei diesem Seitenaufprall wird die seitliche Bewegung des Kindersitzes in sehr kurzer Zeit gestoppt, was einer starken Verzögerung entspricht. Diese Verzögerung wiederum ruft eine erhebliche Kraft auf das im Kindersitz befindliche Kind hervor, durch die das Kind schwer verletzt werden kann.

Ähnliche Verletzungen des Kindes können durch einen Aufprall von Gegenständen auf den Kindersitz in seitlicher Richtung verursacht werden. Dabei kann es sich beispielsweise um im Fahrzeug mitgeführte Gepäckstücke oder auch um einen weiteren Kindersitz handeln. Durch den mit einem derartigen Aufprall verbundenen Impulsübertrag von dem bewegten Gegenstand auf den Kindersitz wird der Kindersitz beschleunigt. Dadurch wirkt, ähnlich wie oben beschrieben, wieder eine potentiell das Kind gefährdende Kraft auf den Kindersitz.

Ein Seitenaufprall des Kindersitzes auf ein Hindernis oder eines Gegenstandes auf den Kindersitz birgt deshalb erhebliche Verletzungsgefahr für das im Kindersitz beförderte Kind.

Aus dem Dokument WO 91 /19623 ist ein Kinder-Sicherheitssitz bekannt mit einem vor dem Körper des Kindes befindlichen Prallkörper, der im Unfallgeschehen das Kind in dem Kinder-Sicherheitssitz hält. Da sich der Prallkörper vor dem Körper des Kindes befindet, bietet er keinen zureichenden Schutz bei einem Seitenaufprall.

Aufgabe der vorliegenden Erfindung ist es daher, einen Kindersitz bereitzustellen, der die Schutzwirkung des Kindersitzes bei einem Seitenaufprall unterschiedlicher Art verbessert.

Diese Aufgabe wird durch den erfindungsgemäßen Kindersitz mit Seitenaufprallschutz in den Merkmalen gemäß Anspruch 1 gelöst. Vorteilhafte Weiterbildungen der vorliegenden Erfindung sind in den Unteransprüchen 2 bis 11 wiedergegeben.

Der erfindungsgemäße Kindersitz mit Seitenaufprallschutz weist mindestens ein Energie absorbierendes und/oder übertragendes Element auf, das so angeordnet und ausgebildet ist, um von einer Ruhestellung in eine Funktionsstellung überführt zu werden, um in der Funktionsstellung seitlich einwirkende Energie aufzunehmen.

Der Kindersitz kann insbesondere in Form einer Sitzschale ausgebildet sein, die einen Tragegriff aufweist. Das Energie absorbierende und/oder übertragende Element ist dann zweckmäßigerweise an diesem Tragegriff angeordnet. Erfindungsgemäß kann es aber auch in anderen Bereichen des Kindersitzes, insbesondere im unteren Seitenbereich, angeordnet sein.

Vorteilhafterweise ist das Energie absorbierende und/oder übertragende Element schwenkbar gelagert und bogenförmig ausgebildet. Durch eine Schwenkbewegung wird das Energie absorbierende und/oder übertragende Element dann von der Ruhestellung in die Funktionsstellung überführt und umgekehrt.

In einer anderen bevorzugten Ausführungsform der vorliegenden Erfindung weist das Energie absorbierende und/oder übertragende Element die Form eines Faltbandes auf. Das Faltband ist in der Ruhestellung im Wesentlichen gestreckt und wird durch Verkürzen des Abstands seiner Enden in die Funktionsstellung überführt.

In einer weiteren bevorzugten Ausführungsform der vorliegenden Erfindung ist das Energie absorbierende und/oder übertragende Element im Wesentlichen zylinderförmig ausgebildet, wobei das Überführen zwischen der Ruhestellung und der Funktionsstellung vorteilhafterweise über ein Gewinde erfolgt.

Erfindungsgemäß ist es vorgesehen dass das Energie absorbierende und/oder übertragende Element beim Anbringen des Kindersitzes an seinem Bestimmungsort automatisch aus der Ruhestellung in die Funktionsstellung überführt wird. Ebenso wird das Energie absorbierende und/oder übertragende Element vorteilhafterweise beim Entfernen des Kindersitzes von seinem Bestimmungsort automatisch aus der Funktionsstellung in die Ruhestellung überführt.

Ein erfindungsgemäßer Kindersitz mit Seitenaufprallschutz kann mehrere Energie absorbierende und/oder übertragende Elemente aufweisen. Dadurch, dass diese zwischen Ruhestellung und Funktionsstellung überführbar ausgebildet sind, wird sichergestellt, dass der Seitenaufprallschutz ohne nennenswerte dauerhafte Vergrößerung der Ausmaße des Kindersitzes vor allem in seitlicher Richtung realisiert wird. Dies ist insbesondere deshalb vorteilhaft, weil der Kindersitz eventuell auch außerhalb des Fahrzeugs Verwendung finden soll, wo ein kompaktes Äußeres des Kindersitzes besonders wünschenswert ist. Auch im Fahrzeug wird eine Minimierung des durch den Kindersitz beanspruchten Raumes angestrebt, um z.B. Beeinträchtigungen eines eventuellen Sitznachbarn oder eine unnötige Verringerung des Stauraums zu vermeiden. Deshalb kann es erfindungsgemäß vorteilhaft sein, im Fahrzeug aus einer Vielzahl von Energie absorbierenden und/oder übertragenden Elementen nur bestimmte Energie absorbierende und/oder übertragende Elemente in die Funktionsstellung zu bringen, und die übrigen Energie absorbierenden und/oder übertragenden Elemente in der Ruhestellung zu belassen.

Um den Benutzungskomfort des Kindersitzes zu erhöhen oder um eine Fehlbedienung zu vermeiden, sind erfindungsgemäss Mittel vorgesehen, die dafür sorgen, dass beim Anbringen des Kindersitzes an seinem Bestimmungsort, beispielsweise dem Sitz eines Kraftfahrzeugs, insbesondere bestimmte Energie absorbierende und/oder übertragende Elemente aus der Ruhestellung in die Funktionsstellung überführt werden. Entsprechend kann dafür gesorgt werden, dass beim Entfernen des Kindersitzes von seinem Bestimmungsort die Energie absorbierenden und/oder übertragenden Elemente in die Ruhestellung gebracht werden.

Bei derartigen Mitteln könnte es sich insbesondere um mechanische oder elektrische Mittel handeln. So könnten die Energie absorbierenden und/oder übertragenden Elemente beim Befestigen des Kindersitzes z.B. über einen Zahnstangenantrieb oder über ein Hebelgetriebe in die Funktionsstellung überführt werden. Es ist auch denkbar, dass beim Befestigen des Kindersitzes ein Kontakt geschlossen wird, so dass beispielsweise ein Elektromagnet aktiviert wird, der das Überführen der Energie absorbierenden und/oder übertragenden Elemente in die Funktionsposition einleitet. Über den Kontakt könnte auch ein Elektromotor aktiviert werden, der die Energie absorbierenden und/oder übertragenden Elemente verstellt.

Wird der Kindersitz an seinem Bestimmungsort in einem Basiselement verankert, in das er beispielsweise gedrückt, gestellt, oder geschoben wird, kann dieses Drücken, Stellen, oder Schieben dazu verwendet werden, die Energie absorbierenden und/oder übertragenden Elemente über die im letzten Absatz beschriebenen Mittel in die Funktionsstellung zu bringen.

Selbst wenn der Kindersitz nicht in einem Basiselement verankert wird, sondern beispielsweise mit einem Sicherheitsgurt auf einem Fahrzeugsitz befestigt wird, sind entsprechende Mittel nutzbar. Insbesondere könnte der durch den Sicherheitsgurt auf den Kindersitz ausgeübte Druck dazu verwendet werden, die Energie absorbierenden und/oder übertragenden Elemente in die Funktionsstellung zu bringen.

In einer vorteilhaften Weiterentwicklung der vorliegenden Erfindung ist der Kindersitz mit Sensoren ausgestattet. Diese Sensoren können beispielsweise geeignet sein, das Überführen von Energie absorbierenden und/oder übertragenden Elementen in verschiedene Stellungen in Abhängigkeit bestimmter Parameter einzuleiten.

Beispielsweise könnten die Sensoren geeignet sein, zu erkennen, dass und an welchem Ort der Kindersitz in einem Fahrzeug angebracht wird, um so das Überführen bestimmter Energie absorbierender und/oder übertragender Elemente in die Funktionsstellung einzuleiten. Ebenso sind gemäss einer nicht beanspruchten Ausführung Sensoren denkbar, die Beschleunigungen des Kindersitzes insbesondere in seitlicher Richtung erkennen, so dass die Energie absorbierenden und/oder übertragenden Elemente erst dann in die Funktionsstellung gebracht werden, wenn diese Beschleunigungen bestimmte Grenzwerte überschreiten. Ebenso ist vorstellbar, dass die Energie absorbierenden und/oder übertragenden Elemente beim Unterschreiten der Grenzwerte wieder in die Ruhestellung gebracht werden.

Entscheidend für den Seitenaufprallschutz eines erfindungsgemäßen Kindersitzes ist die Gestaltung und Anordnung der Energie absorbierenden und/oder übertragenden Elemente.

Eine Aufgabe dieser Elemente ist es, eine unerwünschte seitliche Bewegung, beispielsweise eine absolute Bewegung des Kindersitzes oder eine relative Bewegung eines Gegenstandes auf den Kindersitz zu, abzubremsen. Dazu entziehen die Energie absorbierenden und/oder übertragenden Elemente dieser Bewegung kinetische Energie, indem die Energie absorbierenden und/oder übertragenden Elemente diese aufnehmen und in eine andere Energieform, beispielsweise Wärme, umwandeln.

Eine andere Aufgabe der Energie absorbierenden und/oder übertragenden Elemente ist es, seitlich auf den Kindersitz einwirkende Kräfte in eine tragende Struktur einzuleiten bzw. kinetische Energie aus einer seitlichen Bewegung auf eine derartige Struktur zu übertragen. Erfindungsgemäß wird die zu übertragende Energie durch die Energie absorbierenden und/oder übertragenden Elemente auf den Kindersitz oder das Basiselement übertragen und schließlich über kraft- und/oder formschließende Elemente in die Karosseriestruktur abgeleitet.

Ein derartiges Energie absorbierendes und/oder übertragendes Element ist deshalb so zu gestalten, dass es geeignet ist, kinetische Energie aufzunehmen und in eine andere

Energieform umzuwandeln oder auf eine tragende Struktur (bspw. ISOFIX®-Verankerung und Karosserie) zu übertragen.

Zweckmäßigerweise ist das Energie absorbierende und/oder übertragende Element so ausgebildet, dass es kinetische Energie vorzugsweise durch plastische Verformung oder über Reibung in Wärme umwandelt. Bei einer Bewegung des Kindersitzes in seitlicher Richtung auf einen Gegenstand zu ist es wichtig, diese Bewegung möglichst sanft abzubremsen, um eine zu starke Verzögerung des Kindersitzes zu vermeiden. Deshalb ist für diesen Fall sicherzustellen, dass die Aufnahme der kinetischen Energie hinreichend langsam verläuft. Für den Fall einer Bewegung eines Gegenstandes auf den Kindersitz zu ist die Geschwindigkeit der Energieaufnahme eher nebensächlich. In der Praxis wird jedoch meist eine Überlagerung dieser beiden Bewegungen, also einer Bewegung des Kindersitzes in Richtung auf einen Gegenstand (beispielsweise die Innenseite einer Fahrzeugtür) und einer Bewegung eines Gegenstandes auf den Kindersitz zu, vorliegen. Daher wird es grundsätzlich vorteilhaft sein, bei der Gestaltung der Energie absorbierenden und/oder übertragenden Elemente auf die Geschwindigkeit der Energieaufnahme zu achten.

Soll das Energie absorbierende und/oder übertragende Element kinetische Energie hauptsächlich an eine tragende Struktur weiterleiten, ist es so zu gestalten, dass es sich bei einem Seitenaufprall nicht nennenswert verformt. Dazu ist für das Energie absorbierende und/oder übertragende Element insbesondere ein geeigneter Werkstoff zu wählen. Diese können beispielsweise herkömmliche thermoplastische Werkstoffe, kohlefaserverstärkte Kunststoffe, Legierungen oder eine Kombination hiervon sein.

Um die Umwandlung oder Übertragung der kinetischen Energie sicherzustellen, ist es zweckmäßig, dass das Energie absorbierende und/oder übertragende Element an einer geeigneten Stelle am Kindersitz angeordnet ist. Wird der Kindersitz an seinem Bestimmungsort in einem Basiselement verankert, kann es erfindungsgemäß vorteilhaft sein, auch an diesem Basiselement Energie absorbierende und/oder übertragende Elemente vorzusehen. Die Anordnung der Energie absorbierenden und/oder übertragenden Elemente würde in ähnlicher Weise erfolgen wie bei den nachfolgend im Detail erläuterten Ausführungsbeispielen.

Als Kindersitz im Sinne der vorliegenden Erfindung sind auch Transportvorrichtungen für Säugetiere, insbesondere für Hunde oder Katzen, oder für andere Klein- bzw. Haustiere anzusehen. Ein erfindungsgemäßer Seitenaufprallschutz kann die Sicherheit derartiger Transportvorrichtung deutlich erhöhen.

Außer in einem Kraftfahrzeug kann ein erfindungsgemäßer Kindersitz auch in anderen Transportmitteln, wie z.B. im Zug, im Flugzeug, auf einem Boot, auf einem Fahrrad oder auf einem Kinderwagengestell, verwendet werden und dort seine Vorteile entfalten.

Die konzeptionelle Funktionsweise sowie einige bevorzugte Ausführungsformen der vorliegenden Erfindung werden anhand von Zeichnungen näher erläutert. Es zeigen:
Fig. 1 einen erfindungsgemäßen Kindersitz mit Seitenaufprallschutz mit einem Energie absorbierenden und/oder übertragenden Element in der Ruhestellung;
Fig. 2 einen erfindungsgemäßen Kindersitz mit Seitenaufprallschutz mit einem Energie absorbierenden und/oder übertragenden Element in der Funktionsstellung;
Fig. 3 einen Kindersitz, an dem Bereiche hervorgehoben sind, in denen vorteilhafterweise ein Energie absorbierendes und/oder übertragendes Element angeordnet wird;
Fig. 4 eine perspektivische Darstellung einer bevorzugten Ausführungsform der vorliegenden Erfindung in der Ruhestellung;
Fig. 5 eine perspektivische Darstellung der Ausführungsform gemäß Fig. 4 in der Funktionsstellung;
Fig. 6 eine Vorderansicht der Ausführungsform gemäß Fig. 5 in der Funktionsstellung;
Fig. 7 eine schematische Darstellung einer weiteren bevorzugten Ausführungsform der vorliegenden Erfindung;
Fig. 8 eine perspektivische Darstellung der Ausführungsform gemäß Fig. 7;
Fig. 9 eine perspektivische Darstellung der Ausführungsform gemäß Fig. 8 am Tragegriff einer Sitzschale;
Fig. 10 eine Explosionsdarstellung einer weiteren bevorzugten Ausführungsform der vorliegenden Erfindung;
Fig. 11 eine perspektivische Darstellung der Ausführungsform gemäß Fig. 10 am Tragegriff einer Sitzschale.

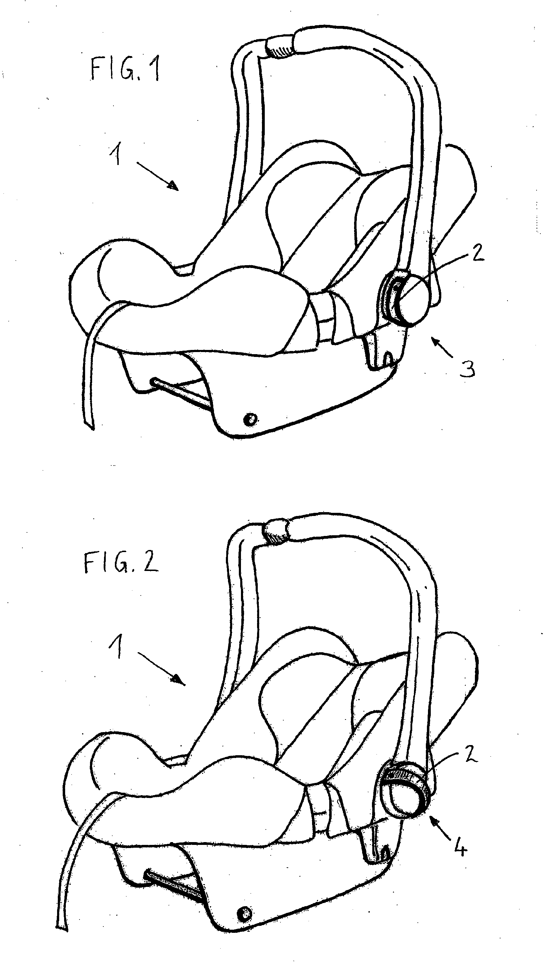

Der in Figur 1 dargestellte erfindungsgemäße Kindersitz mit Seitenaufprallschutz 1 umfasst ein Energie absorbierendes und/oder übertragendes Element 2, das sich in der Ruhestellung 3 befindet. Figur 2 zeigt einen erfindungsgemäßen Kindersitz 1 mit dem Energie absorbierenden und/oder übertragenden Element 2 in der Funktionsstellung 4.

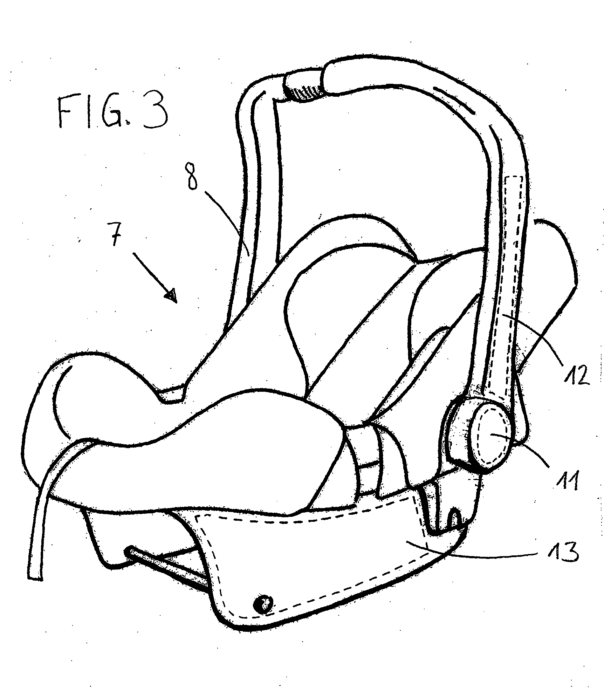

Figur 3 zeigt eine Sitzschale 7 mit Tragegriff 8. Durch gestrichelte Linien sind Bereiche des Kindersitzes gekennzeichnet, in denen ein Anbringen des Energie absorbierenden und/oder übertragenden Elements 2 besonders vorteilhaft ist. Dabei handelt es sich um den Befestigungsbereich des Tragegriffes an der Sitzschale 11, den Seitenarm 12 des Tragegriffes und den unteren Seitenbereich 13 der Sitzschale. Im Bereich 13 ist das Trägermaterial der Sitzschale nicht von Polstern überdeckt, so dass dieser Bereich für die Aufnahme von Energie absorbierenden und/oder übertragenden Elementen 2 besonders geeignet ist. In von Polstern überdeckten Bereichen des Kindersitzes ist das Anbringen von Energie absorbierenden und/oder übertragenden Elementen 2 grundsätzlich auch möglich.

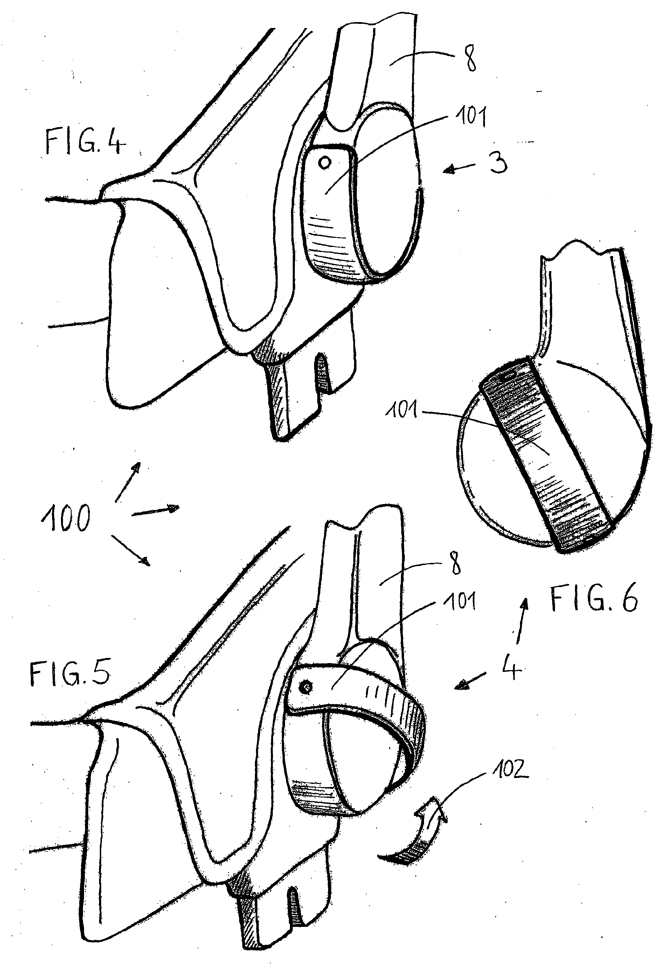

Die Figuren 4 - 6 zeigen Detailansichten der bereits in den Figuren 1 und 2 dargestellten bevorzugten Ausführungsform 100 der vorliegenden Erfindung. Bei dieser Ausführungsform ist das Energie absorbierende und/oder übertragende Element 101 bogenförmig ausgebildet und schwenkbar am Kindersitz gelagert. In der in Figur 4 dargestellten Ruhestellung 3 schmiegt es sich im Bereich 11 an den Tragegriff 8 an. Zum Überführen in die in Figur 5 gezeigte Funktionsstellung 4 wird es in Richtung des Pfeils 102 um etwa 90° geschwenkt, so dass es bogenförmig in seitlicher Richtung aus dem Bereich 11 herausragt. Figur 6 zeigt eine Vorderansicht dieses Energie absorbierenden und/oder übertragenden Elements 101 in der Funktionsstellung 4. Das Energie absorbierende und/oder übertragende Element 101 kann so ausgebildet sein, dass es durch Verformung kinetische Energie aufnehmen kann. Es kann beispielsweise so gestaltet sein, dass bei einer Verformung kinetische Energie durch innere Reibung in Wärme umgewandelt wird. Hierzu ist für das Energie absorbierende und/oder übertragende Element 101 ein geeignetes Material, wie z.B. ein spezieller Kunststoff, zu wählen. Das Energie absorbierende und/oder übertragende Element 101 kann aber erfindungsgemäß auch so gestaltet sein, dass eine bleibende Verformung grundsätzlich nicht möglich ist, um so die seitlich einwirkende Energie im wesentlichen vollständig aufzunehmen und an die tragende Struktur zu übertragen.

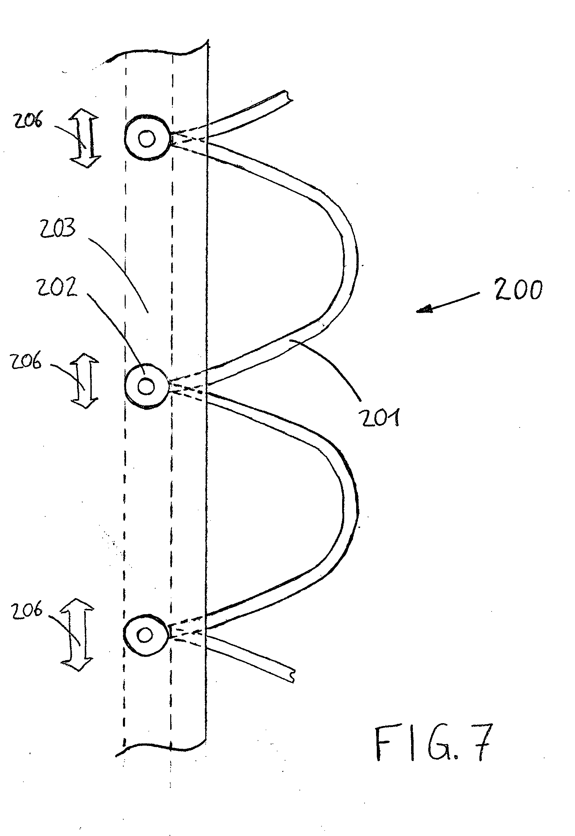

Figur 7 zeigt eine schematische Darstellung einer weiteren bevorzugten Ausführungsform 200 der vorliegenden Erfindung, bei der das Energie absorbierende und/oder übertragende Element in Form eines Faltbandes 201 ausgebildet ist. Hier weist der Kindersitz 1 (nicht dargestellt) Führungsmittel 203 auf, in denen Gleitelemente 202 gelagert sind, an denen das Faltband 201 befestigt ist. Die Gleitelemente 202 sind in Richtung der Pfeile 206 verschiebbar. In der Ruhestellung 3 (nicht dargestellt) ist das Faltband 201 gestreckt und die Gleitelemente 202 weisen maximalen Abstand voneinander auf. Zum Überführen in die Funktionsstellung 4 gemäß Figur 7 wird der Abstand zwischen den Gleitelementen 202 verkürzt, so dass sich die zwischen je zwei Gleitelementen liegenden Bereiche des Faltbandes 201 aus der von den Führungsmitteln 203 aufgespannten Ebene herauswölben.

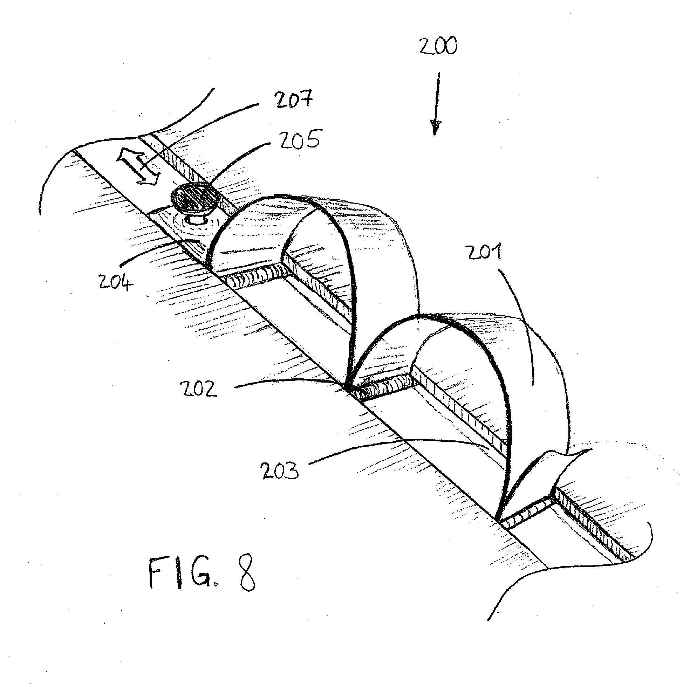

Vorteilhafterweise ist das Faltband 201 so ausgebildet, dass nur eines seiner Enden verschiebbar ist. Dieses Ende weist dann ein Endelement 204 auf, das über ein Arretierungsmittel 205 arretierbar ist. Figur 8 zeigt eine perspektivische Darstellung dieser Ausführungsform 200. Das Überführen des Faltbandes 201 zwischen der Ruhestellung 3 und der Funktionsstellung 4 erfolgt über ein Verschieben des Endelements 204 in Richtung des Pfeils 207. Durch das Arretierungsmittel 205 ist das Faltband 201 in verschiedenen Stellungen arretierbar.

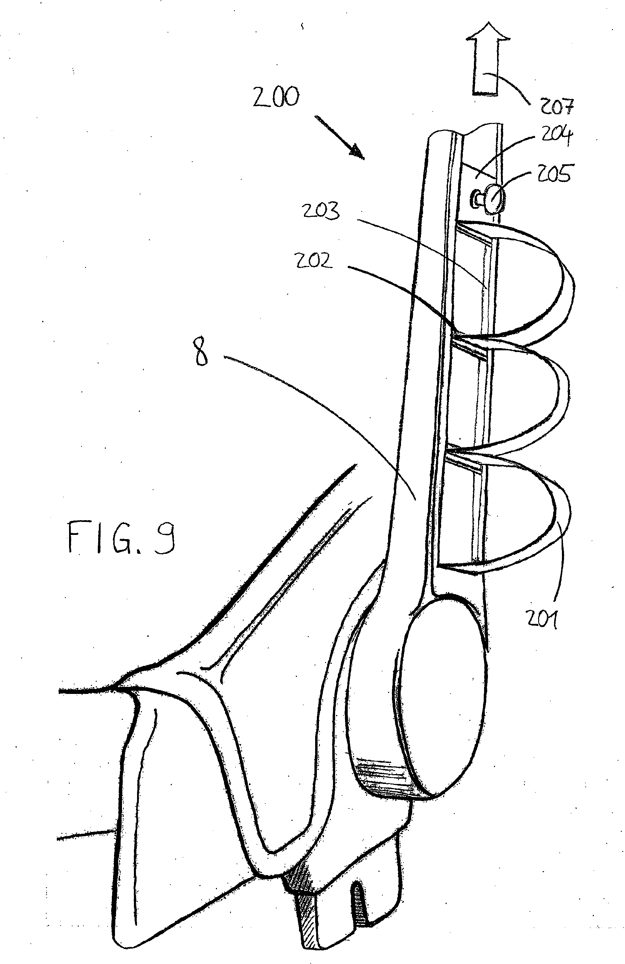

Vorteilhafterweise ist das Faltband im Seitenbereich 12 des Tragegriffs 8 einer Sitzschale 7 angeordnet. Diese Anordnung ist in Figur 9 dargestellt. Das Faltband 201 befindet sich hier in der Funktionsstellung 4 und ist durch Verschieben des Endelements 204 in Richtung des Pfeils 207 in die Ruhestellung 3 (nicht dargestellt) überführbar.

Es kann zweckmäßig sein, die Gleitelemente 202 durch Rollelemente zu ersetzen, so dass sie in dem Führungsmittel 203 nicht gleiten sondern rollen. Auch kann es vorteilhaft sein, Abstandselemente beispielsweise an den Gleitelementen 202 vorzusehen, die dafür sorgen, dass die Gleitelemente 202 nur bis zu einem bestimmten paarweisen Abstand aneinander angenähert werden können. Durch diesen Abstand ist dann die Funktionsstellung 4 festgelegt, so dass es dem Benutzer des Kindersitzes erleichtert wird, diese einzustellen.

Bei dieser Ausführungsform 200 kann kinetische Energie ähnlich wie in der Ausführungsform 100 durch eine Verformung des Faltbandes 201 aufgenommen und in Wärme umgewandelt werden. Es kann aber auch vorteilhaft sein, die Gleitelemente 202 und das Arretierungsmittel 205 so zu gestalten, dass sie in der Funktionsstellung 4 nur unter erhöhter Reibung verschiebbar sind. Die Umwandlung von kinetischer Energie in Wärme findet dann weniger im Faltband 201 statt, sondern bevorzugt an den Gleitelementen 202, dem Führungsmittel 203 und dem Arretierungsmittel 205.

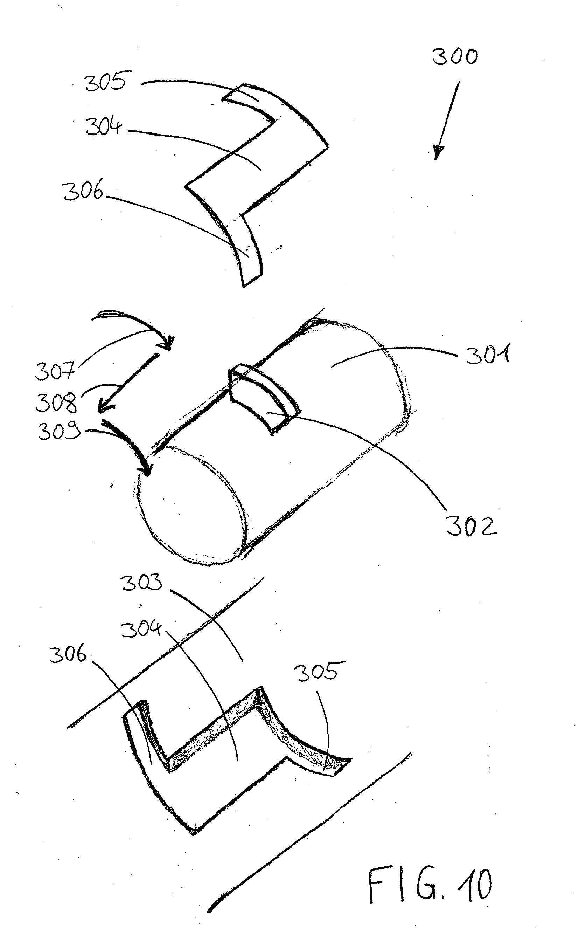

In einer weiteren bevorzugten Ausführungsform 300 der vorliegenden Erfindung ist das Energie absorbierende und/oder übertragende Element 2 im Wesentlichen zylinderförmig ausgebildet. Figur 10 zeigt eine Explosionsdarstellung eines derartigen Energie absorbierenden und/oder übertragenden Elements 2. Hier weist das Energie absorbierende und/oder übertragende Element die Form eines Zylinders 301 auf, an dem Führungsstifte 302 angeordnet sind. Der Zylinder wird in einer Zylinderführung 303 geführt, die kulissenhaft ausgebildete Aussparungen 304 für die Führungsstifte 302 aufweist. In der Ruhestellung 3 (nicht dargestellt) befinden sich die Führungsstifte 302 in den Ruhebereichen 305 der Aussparungen 304. Durch Drehen des Zylinders 301 in Richtung des Pfeils 307 werden die Führungsstifte 302 aus diesen Bereichen herausgeführt, so dass der Zylinder in der Zylinderführung 303 aus der Ruhestellung 3 (nicht dargestellt) in Richtung des Pfeils 308 in die Funktionsstellung 4 (nicht dargestellt) verschoben werden kann. Vorzugsweise wird diese Verschiebung 308 durch eine Feder getrieben. Durch eine weitere Drehung des Zylinders 301 in Richtung des Pfeils 309 werden die Führungsstifte 302 in die Funktionsbereiche 306 der Aussparungen gebracht, wodurch das Energie absorbierende und/oder übertragende Element 2 in der Funktionsstellung 4 verankert wird.

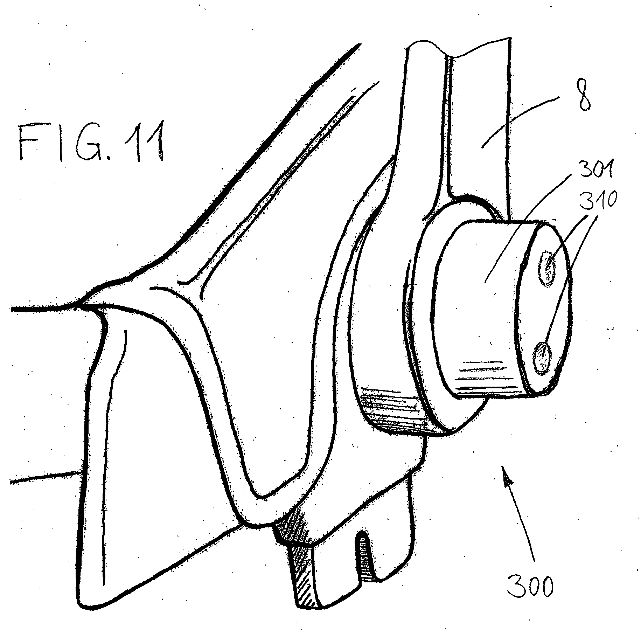

In dieser Ausführungsform 300 ist das Energie absorbierende und/oder übertragende Element 2 bevorzugt im Bereich 11 einer Sitzschale 7 angeordnet. Diese Anordnung ist in Figur 11 dargestellt. Die Griffmulden 310 erleichtern das Verdrehen und Verschieben des Zylinders 301.

Auch bei der Ausführungsform 300 kann kinetische Energie, analog zu den Ausführungsformen 100 und 200, durch eine Verformung des Zylinders 301 aufgenommen und in Wärme umgewandelt werden. Es kann aber auch zweckmäßig sein, den Zylinder 301 und die Führungsstifte 302 so zu gestalten, dass die Führungsstifte 302 bei einem Aufprall vom Zylinder 301 abreißen und dabei kinetische Energie in Wärme umgewandelt wird.

### Bezugszeichenliste

- 1: Kindersitz mit Seitenaufprallschutz
- 2: Energie absorbierendes und/oder übertragendes Element
- 3: Ruhestellung
- 4: Funktionsstellung
- 7: Sitzschale
- 8: Tragegriff
- 11: Befestigungspunkt des Tragegriffes
- 12: Seitenarm des Tragegriffes
- 13: unterer Seitenbereich des Kindersitzes
- 100: Ausführungsform mit bogenförmigem Energie absorbierendem und/oder übertragendem Element
- 101: schwenkbar gelagertes bogenförmiges Energie absorbierendem und/oder übertragendem Element
- 102: Schwenkrichtung
- 200: Ausführungsform mit Faltband als Energie absorbierendem und/oder übertragendem Element
- 201: Faltband
- 202: Gleitelement
- 203: Führungsmittel
- 204: Endelement
- 205: Arretierungsmittel
- 206: Verschiebungsrichtung der Gleitelemente
- 207: Verschiebungsrichtung des Endelements
- 300: Ausführungsform mit zylinderförmigem Energie absorbierendem und/oder übertragendem Element
- 301: Zylinder
- 302: Führungsstift
- 303: Zylinderführung
- 304: kulissenhaft ausgebildete Aussparung
- 305: Ruhebereich der Aussparung
- 306: Funktionsbereich der Aussparung
- 307: Entriegelung
- 308: Verschiebung
- 309: Verriegelung
- 310: Griffmulde

## Patentansprüche

1. Kindersitz (1) mit Seitenaufprallschutz mit mindestens einem Energie absorbierenden und/oder übertragenden Element (2), das so angeordnet und ausgebildet ist, um von einer Ruhestellung (3) in eine Funktionsstellung (4) überführt zu werden, um in der Funktionsstellung (4) seitlich einwirkende Energie aufzunehmen, **dadurch gekennzeichnet, dass** das Energie absorbierende und/oder übertragende Element (2) beim Anbringen des Kindersitzes (1) an seinem Bestimmungsort automatisch aus der Ruhestellung (3) in die Funktionsstellung (4) überführt wird.

2. Kindersitz (1) gemäß Anspruch 1, wobei das Energie absorbierende und/oder übertragende Element (2) beim Entfernen des Kindersitzes (1) von seinem Bestimmungsort automatisch aus der Funktionsstellung (4) in die Ruhestellung (3) überführt wird.

3. Kindersitz (1) gemäß Anspruch 1 oder 2, wobei der Bestimmungsort ein Sitz eines Kraftfahrzeuges ist.

4. Kindersitz (1) gemäß einem der Ansprüche 1 - 3, wobei der Kindersitz eine Sitzschale (7) mit Tragegriff (8) ist.

5. Kindersitz (1) gemäß Anspruch 4, wobei das Energie absorbierende und/oder übertragende Element (2) am Tragegriff (8) angeordnet ist.

6. Kindersitz (1) gemäß einem der Ansprüche 1 - 4, wobei das Energie absorbierende und/oder übertragende Element (2) im unteren Seitenbereich (13) des Kindersitzes angeordnet ist.

7. Kindersitz (1) gemäß einem der Ansprüche 1 - 6, wobei das Energie absorbierende und/oder übertragende Element (2) schwenkbar gelagert ist.

8. Kindersitz (1) gemäß einem der Ansprüche 1 - 7, wobei das Energie absorbierende und/oder übertragende Element (2) bogenförmig ausgebildet ist.

9. Kindersitz (1) gemäß einem der Ansprüche 1 - 6, wobei das Energie absorbierende und/oder übertragende Element (2) die Form eines Faltbandes (201) aufweist.

10. Kindersitz (1) gemäß einem der Ansprüche 1 - 6, wobei das Energie absorbierende und/oder übertragende Element (2) im Wesentlichen zylinderförmig ausgebildet ist.

11. Kindersitz (1) gemäß Anspruch 10, wobei das Überführen des Energie absorbierenden und/oder übertragenden Elements zwischen der Ruhestellung (3) und der Funktionsstellung (4) über ein Gewinde erfolgt.

## Claims

1. A child car seat (1) with side impact protection, comprising at least one element absorbing and/or transmitting energy (2) which is arranged and designed to be transferred from a rest position (3) to a functioning position (4) to absorb a laterally impacting energy in the functioning position (4), **characterized in that** said element absorbing and/or transmitting energy (2) is automatically transferred from said rest position (3) to said functioning position (4) when said child car seat (1) is positioned at its destination.

2. The child car seat (1) according to claim 1, wherein said element absorbing and/or transmitting energy (2) is automatically transferred from said functioning position (4) to said rest position (3) when said child car seat (1) is removed from its destination.

3. The child car seat (1) according to claims 1 or 2, wherein the destination is a seat of a vehicle.

4. The child car seat (1) according to any of claims 1 to 3, wherein the child car seat is a seat shell (7) with a carrying handle (8).

5. The child car seat (1) according to claim 4, wherein said element absorbing and/or transmitting energy (2) is arranged at said carrying handle (8).

6. The child car seat (1) according to any of claims 1 to 4, wherein said element absorbing and/or transmitting energy (2) is arranged in the lower side region (13) of said child car seat.

7. The child car seat (1) according to any of claims 1 to 6, wherein said element absorbing and/or transmitting energy (2) is mounted to be pivoted.

8. The child car seat (1) according to any of claims 1 to 7, wherein said element absorbing and/or transmitting energy (2) is designed in an arc-shaped manner.

9. The child car seat (1) according to any of claims 1 to 6, wherein said element absorbing and/or transmitting energy (2) has the shape of a folded band (201).

10. The child car seat (1) according to any of claims 1 to 6, wherein said element absorbing and/or transmitting energy (2) is designed substantially cylinder-shaped.

11. The child car seat (1) according to claim 10, wherein the transfer of said element absorbing and/or transmitting energy (2) between said rest position (3) and said functioning position (4) is performed via a winding.

## Revendications

1. Siège pour enfant (1) doté d'une protection contre les chocs latéraux, comprenant au moins un élément (2) absorbant et/ou transmettant de l'énergie qui est disposé et agencé de manière à pouvoir être transféré d'une position de repos (3) dans une position fonctionnelle (4), pour absorber, dans la position fonctionnelle (4), de l'énergie agissant latéralement, **caractérisé en ce que** l'élément (2) absorbant et/ou transmettant de l'énergie est transféré automatiquement de la position de repos (3) dans la position fonctionnelle (4) lorsque le siège pour enfant (1) est installé à l'endroit prévu pour son utilisation.

2. Siège pour enfant (1) selon la revendication 1, dans lequel l'élément (2) absorbant et/ou transmettant de l'énergie est transféré automatiquement de la position fonctionnelle (4) dans la position de repos (3) lorsque le siège pour enfant (1) est retiré de l'endroit prévu pour son utilisation.

3. Siège pour enfant (1) selon la revendication 1 ou la revendication 2, dont l'endroit prévu pour son utilisation est un siège d'un véhicule automobile.

4. Siège pour enfant (1) selon l'une des revendications 1 à 3, lequel siège pour enfant est une coque d'assise (7) avec une poignée de transport (8).

5. Siège pour enfant (1) selon la revendication 4, dans lequel l'élément (2) absorbant et/ou transmettant de l'énergie est agencé sur la poignée de transport (8).

6. Siège pour enfant (1) selon l'une des revendications 1 à 4, dans lequel l'élément (2) absorbant et/ou transmettant de l'énergie est agencé dans la zone latérale inférieure (13) du siège pour enfant.

7. Siège pour enfant (1) selon l'une des revendications 1 à 6, dans lequel l'élément (2) absorbant et/ou transmettant de l'énergie est monté pivotant.

8. Siège pour enfant (1) selon l'une des revendications 1 à 7, dans lequel l'élément (2) absorbant et/ou transmettant de l'énergie est en forme d'arc.

9. Siège pour enfant (1) selon l'une des revendications 1 à 6, dans lequel l'élément (2) absorbant et/ou transmettant de l'énergie se présente sous la forme d'une bande plissée (201).

10. Siège pour enfant (1) selon l'une des revendications 1 à 6, dans lequel l'élément (2) absorbant et/ou transmettant de l'énergie est de forme sensiblement cylindrique.

11. Siège pour enfant (1) selon la revendication 10, dans lequel le transfert de l'élément (2) absorbant et/ou transmettant de l'énergie entre la position de repos (3) et la position fonctionnelle (4) s'effectue par l'intermédiaire d'un filetage.
